# EUROPÄISCHE PATENTSCHRIFT

(11) **EP 2 090 497 B1**
(45) Veröffentlichungstag und Bekanntmachung des Hinweises auf die Patenterteilung: **16.06.2010**
(21) Anmeldenummer: 08153328.3
(22) Anmeldetag: 26.03.2008
(51) Int. Cl.: B62D 6/10, B62D 15/02, G01D 5/20

(54) **Vorrichtung zum ermitteln eines Verdrehwinkels**
Device for determining a torsion angle
Dispositif de détermination d'un angle de torsion

(30) Priorität: 13.02.2008 DE 102008008835
(43) Veröffentlichungstag der Anmeldung: 19.08.2009
(73) Patentinhaber: ZF Friedrichshafen AG, 80846 Friedrichshafen (DE)
(72) Erfinder: Raschke, Dirk, 91275, Auerbach (DE); Schmidbauer, Armin, 91289, Schnabelwaid (DE)

(56) Entgegenhaltungen:
- DE-A1- 2 606 724
- DE-A1- 10 144 910
- DE-A1- 10 259 082
- DE-A1-102005 010 909
- DE-A1-102005 011 196
- US-A1- 2003 051 562

## Beschreibung

Die Erfindung geht aus von einer geteilten Lenksäule mit Torsionsstab und mit Drehmomentsensor, wie sie im Stand der Technik wohlbekannt ist. Insbesondere zeigen die Druckschriften DE 10 2006 055 049 C (Cherry) und DE101 52 704 A (Mercedes) solche Lenksäulen und solche Drehmomentsensoren.

Im Stand der Technik sind insbesondere verschiedene Kombinationssensoren bekannt. So zeigt das Patent DE 10 2006 055 049 C der Anmelderin Cherry eine Vorrichtung nach dem Oberbegriff des Anspruchs 1 des Anspruchs 8, des Anspruchs 9 und des Anspruchs 10. Ein derartiger Kombinierter Lenkwinkel und Drehmomentsensor, erzeugt der auf induktiver Basis mit Wirbelstromdämpfung zwei absolute Winkelmesssignale über einen Winkelbereich von 360°. Hierzu ist eine Lenksäule in üblicher Weise durch ein Torsionselement in eine Eingangswelle und eine relativ dazu tordierbare Ausgangswelle geteilt. Am Ende der Eingangswelle (in der Nähe der Stossstelle) ist ein erster Dämpfungsrotor angeordnet, während am Ende der Ausgangswelle ein zweiter Dämpfungsrotor angeordnet ist. Von der geteilten Lenksäule rechtwinklig durchsetzt wird ein Träger, der im gesamten Winkelbereich von 360° mit mehreren Flachspulen bestückt und gehäusefest angeordnet ist. Die zwei Dämpfungsrotoren tragen jeweils ein passives Betätigungselement für die Wirbelstromdämpfung, welche jeweils ortsselektiv (d.h. ohne periodisch wiederholte Strukturen oder Kodespuren) auf die Flachspulen des Trägers einwirken. Aus den Signalen der Flachspulen lassen sich die zwei genannten absoluten Winkelmesssignale ermitteln und daraus lassen sich (durch Summen- und Differenzbildung) der Lenkwinkel und das Drehmoment bestimmen.

Die häufig geforderte Redundanz wird bei dieser Technologie sehr einfach durch einen weiteren Sensorträger (mit Flachspulen in einer weiteren Messebene) und durch die gleichen Dämpfungsrotoren (mit weiteren ortsselektiven Betätigungselementen in der genannten weiteren Messebene) erzielt.

### DE3738607:

Ein Planetengetriebe umfasst eine Antriebswelle mit Sonnenrad, wenigstens ein in das Sonnenrad eingreifendes Planetenrad, ein mit dem Planetenrad kämmendes, ortsfestes Hohlrad, einen das Planetenrad tragenden Planetenradträger und eine mit dem Planetenradträger verbundene Abtriebswelle. Das Planetenrad und das Hohlrad bestehen jeweils aus zwei separaten, zueinander koaxialen Teilen, wobei ein Teil des Hohlrades relativ zum anderen Teil des Hohlrades verdrehbar und feststellbar ist.

### DE2606724:

Verzögerungs- und / oder Beschleunigungssensor zum Anzeigen der Überschreitung eines vorgegebenen Verzögerungs- oder Beschleunigungswerts eines zu überwachenden rotierenden Teils mit einem normalerweise mit dem zu überwachenden rotierenden Teil mitrotierenden Schwungrad, das sich beim Überschreiten eines vorgegebenen Beschleunigungs- und / oder Verzögerungswerts gegenüber dem rotierenden Teil begrenzt verdreht, wobei diese Relativdrehung mittels einer am Schwungrad angeordneten Signalerzeugungsvorrichtung ein Signal auslöst, wobei auf dem Schwungrad eine beweglich zu diesem angeordnete Mitnahmeeinrichtung angeordnet ist, die sich im normalen Zustand mit dem zu überwachenden Teil und dem Schwungrad dreht, jedoch in Bezug auf das Schwungrad gegen ein steuerbares Drehmoment drehbar ist.

### DE102005011196:

Es wird eine Sensoranordnung zur Erfassung eines Differenzwinkels bzw. Drehmoments vorgeschlagen, mit mindestens einem magnetfeldempfindlichen Sensorelement, mit dem die Magnetfeldinformationen eines Magnetkreises auswertbar sind, der insbesondere aufgrund eines auf einen Torsionsstab wirkenden Drehmoments relativ zum Sensorelement verdrehbar ist. Es sind Fluxringe vorhanden, die axial verlaufende, nicht ineinander greifende Zähne aufweisen, mit denen der magnetische Fluss zwischen dem Magnetpolrad und dem Sensorelement beeinflussbar ist. Die Fluxringe sind derart ausgebildet, dass sich das Sensorelement und das Magnetpolrad zwischen dem auf einem kleineren Durchmesser liegenden inneren Fluxring und dem auf einem größeren Durchmesser liegenden äußeren Fluxring befinden.

### DE102005010909:

Die Schrift betrifft einen Kraft- und Winkelsensor zur Messung des Drehwinkels einer Welle und einer auf die Welle ausgeübten Kraft, wobei in einem Gehäuse, durch das die Welle verläuft, eine in Bezug auf das Gehäuse drehfest angeordnete Hauptleiterplatte, die eine mittige Öffnung besitzt, durch die die Welle verläuft, an einer Seite der Hauptleiterplatte eine drehfest auf der Welle angeordnete erste Leiterplatte zur Messung des Drehwinkels, die eine mittige Öffnung besitzt, durch die die Welle verläuft, und an der anderen Seite der Hauptleiterplatte eine drehfest mit der Welle verbundene zweite Leiterplatte zur Messung der Kraft angeordnet sind, welche eine mittige Öffnung besitzt, durch die die Welle verläuft. Die zweite Leiterplatte ist an einem zweiten Ort drehfest mit der Welle verbunden, der von dem ersten Ort, an dem die erste Leiterplatte drehfest mit der Welle verbunden ist, durch einen Abstand beabstandet ist. An den einander zugewandten Flächen der Hauptleiterplatte und der ersten Leiterplatte sowie der Hauptleiterplatte und der zweiten Leiterplatte sind sich gegenüberliegend zur Messung des Drehwinkels bzw. der Kraft Elektroden zur kapazitiven Messung der Verdrehung der ersten Leiterplatte in Bezug auf die Hauptleiterplatte bzw. zur Messung der Verdrehung der zweiten Leiterplatte in Bezug auf die erste Leiterplatte angeordnet.

### DE102004027954:

Induktiver Winkelsensor, insbesondere für die Messung von Torsionswinkeln, zum Beispiel an Lenksäulen:
- mit einem Stator, der zumindest ein Erregerelement und zumindest ein erstes Empfangselement umfasst,
- mit einem ersten Rotor,
- mit einem zweiten Rotor, der zumindest ein induktives Koppelelement umfasst, und mit einem Torsionselement, auf dem der erste Rotor und der zweite Rotor beabstandet voneinander angeordnet sind.

### DE2951148:

Messeinrichtung zur berührungsfreien statischen oder dynamischen Erfassung eines Drehwinkels und / oder Drehmoments an einer stehenden oder rotierenden Welle gekennzeichnet durch:
- zwei zur Welle koaxial angeordnete Körper aus elektrisch leitendem, nichtmagnetischen Werkstoff verwendet werden, von welchem einer drehfest mit der Welle verbunden und der andere diesem gegenüber verdrehbar ist;
- eine von hochfrequentem Wechselstrom durchflossene Koaxial-Spule ist in unmittelbarer Nähe der beiden Körper angeordnet;
- die Körper weisen Ausschnitte auf, deren gemeinsame Überdeckungsfläche mit zunehmendem, zwischen den beiden Körpern auftretendem Verdrehwinkel sich ändert, so dass durch Messung der Impedanzänderungen der Spule, die durch in den Körper induzierte Wirbelströme entstehen, die relative Verdrehung der beiden Körper erfassbar ist.

### DE10152704:

Die Schrift betrifft eine Kraftfahrzeuglenkung mit folgenden Elementen:
- mit einem Lenkrad, das drehfest mit einer Lenksäule verbunden ist;
- mit einem Lenkritzel, das mit einer Zahnstange kämmt;
- mit einem eingangsseitig mit der Lenksäule und ausgangsseitig mit dem Lenkritzel verbundenen Überlagerungsgetriebe, das einen zweiten Eingang mit einem elektrischen Überlagerungsantrieb aufweist; sowie
- mit einer elektronischen Steuerung, die zur Ansteuerung des elektrischen Überlagerungsantriebs in Abhängigkeit von Eingangssignalen eingerichtet ist,
- wobei weiter ein Servoantrieb vorgesehen ist, der von der elektronischen Steuerung angesteuert wird und der auf das Lenkritzel oder auf die Zahnstange wirkt.

Zwischen dem Lenkrad und dem Lenkritzel ist ein Drehmomentsensor mit Torsionsstab vorgesehen, der ein Drehmoment-Eingangssignal für die Steuerung liefert. Dadurch können steer-by-wire-Funktionen ohne Rückwirkung auf das Lenkrad erfolgen. Das Überlagerungsgetriebe in der bekannten Lenksäule ist ein Planetengetriebe mit einem Sonnenrad lenkradseitig, mit Planetenrädern und mit einem Sternrad lenkritzelseitig. Es kann autonom geregelte Servo-Eingriffe am Lenkritzel kompensieren in Richtung auf das Lenkrad hin. Das Planetengetriebe kann auch bewirken, dass die Lenkung für den Fahrer direkter ist (beim Einparken) oder indirekter ist (bei Geradeausfahrt). Der genannte Drehmomentsensor liegt an einer anderen Stelle und hat mit dem Überlagerungsgetriebe nichts zu tun.

Als weiterer Stand der Technik können noch Dehnmessstreifen oder Schallsysteme zum Ermitteln des Lenkmoments genannt werden.

### Aufgabe

Es ist ein Sensor zur Verfügung zu stellen, der den relativen Verdrehwinkel zweier Halbwellen zueinander misst. Die bevorzugte, aber nicht ausschließliche Verwendung dieses Sensors besteht darin, mithilfe eines Torsionsstabs das zwischen den Halbwellen übertragene Drehmoment zu ermitteln. Der Winkelsensor und der Drehmomentsensor sollen gleichzeitig eine hohe Auflösung haben, präzise arbeiten, multiturnfähig und kostengünstig in der Herstellung sein. Zur Erzielung der Multiturnfähigkeit muss auf eine Wickelfeder verzichtet werden. Der Bauraum muss dabei klein sein, besonders im Durchmesser deutlich unter 90 mm ausfallen.

Diese Aufgabe wird durch die Merkmale des Ansprüche 1, 8, 9 und 10 gelöst.

Bereitgestellt wird ein mechanisches Planetengetriebe, dessen elektrische Sensorik beliebig wählbar ist, welches präzise und mit hoher Auflösung arbeitet, aber dennoch kostengünstig herzustellen ist. Dieses Getriebe errechnet rein mechanisch den Differenzwinkel zwischen zwei Drehbewegungen und gibt ihn an einen einzigen Anzeigering weiter. Über den kann diese Differenzbewegung dann als zeitlicher Verlauf des Differenzwinkels gemessen werden.

Bei dem vorliegenden Winkelsensor und Drehmomentsensor handelt es sich um ein Planetengetriebe, welches das Drehmoment präzise ermitteln kann. Bekannt sind Planetengetriebe im Einsatz bisher bei z.B. Servolenkungen. Einsatz findet das erfindungsgemäße zweistufige Planetengetriebe überall dort, wo primär ein Verdrehwinkel und sekundär ein Drehmoment ermittelt werden muss, z B. in Lenkungen, Servolenkungen, Elektromotoren, etc.

Unter einem "zweistufigen Planetengetriebe" wird in der vorliegenden Anmeldung verstanden, dass zwei einstufige Planetengetriebe über ihren Planetenträger gekoppelt sind, der also ein gemeinsamer Planetenträger für die zwei Sätze von Planetenrädern ist. Das erste Planetengetriebe setzt sich dabei zusammen aus
- einem Gehäuse 3 mit Innenverzahnung, das als Hohlrad wirkt;
- einem ersten Satz von ein oder mehr Planetenrädern, die in einer unteren Ebene des Planetenträgers drehbar gelagert sind; und
- einem ersten, innen liegenden Rotor 1 mit einer Außenverzahnung.

Das zweite Planetengetriebe setzt sich zusammen aus
- einer Verdrehanzeige mit einer Innenverzahnung, die als Hohlrad wirkt;
- einem zweiten Satz von ein oder mehr Planetenrädern, die in einer oberen Ebene des Planetenträgers drehbar gelagert sind; und
- einem zweiten, innen liegenden Rotor 2 mit einer Außenverzahnung.

Diese zwei Planetengetriebe sind über den gemeinsamen Planetenträger gekoppelt, d.h. der untere Satz von Planetenrädern und der obere Satz von Planetenrädern können sich nur gemeinsam relativ zur Achse der Lenksäule drehen. Im Betrieb ist der Rotor 1 drehfest mit der unteren Hälfte der Lenksäule verbunden, während der Rotor 2 drehfest mit der oberen Hälfte der Lenksäule gekoppelt ist. Die gegenüberstehenden Enden der geteilten Lenksäule können ihrerseits über einen Torsionsstab gekoppelt sein, sodass die relative Verdrehung der Rotoren 1 und 2 der zu messende Verdrehwinkel ist, der gegebenenfalls mit Hilfe der elastischen Eigenschaften des Torsionsstabs in das gewünschte Drehmoment umgerechnet werden kann.

Festzuhalten ist, dass das Gehäuse, welches ein Hohlrad darstellt, relativ zur Lenksäule oder zum Fahrzeug ortsfest oder drehfest angebracht werden kann, aber nicht muss. Die Eigenschaft des zweistufigen Planetengetriebes, den Differenzwinkel präzise anzuzeigen, wird durch diese möglichen Ausführungsformen des Gehäuses nicht beeinflusst.

Die Verhältnisse der Zahnzahlen können frei gewählt werden. Wichtig ist allerdings, dass beide Stufen des Planetengetriebes das gleiche Übersetzungsverhältnis aufweisen.

Auch der verwendete Modul der Zahnräder ist wählbar; er muss allerdings in den beiden Stufen nicht unbedingt gleich sein.

Ein Ausführungsbeispiel der Erfindung wird anhand der Fig. 1 bis 3 erläutert. Es zeigt
- Fig. 1: eine axial auseinandergezogene perspektivische Darstellung der Bauteile der erfindungsgemäßen Vorrichtung zum Ermitteln eines Differenz- oder Verdrehwinkels,
- Fig.2: eine perspektivische Ansicht der Verdrehwinkelmessvorrichtung von Fig. 1 in zusammengebauter Form so, dass die Vorrichtung auf einer Trennungsstelle zweier Wellenstümpfe, z.B. einer geteilten, mit einem Torsionsstab versehenen Lenksäule eines Fahrzeugs, montiert werden kann; und
- Fig.3: die erfindungsgemäße Verdrehwinkelmessvorrichtung von Fig.1 und Fig.2 in einer Verwendung als Drehmomentsensor, der auf der Lenksäule beispielsweise eines Kraftfahrzeugs verbaut ist.

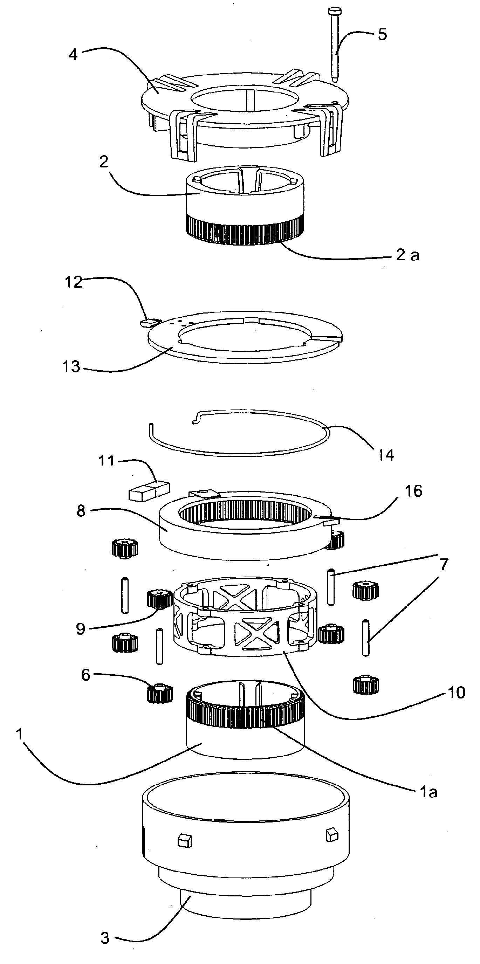

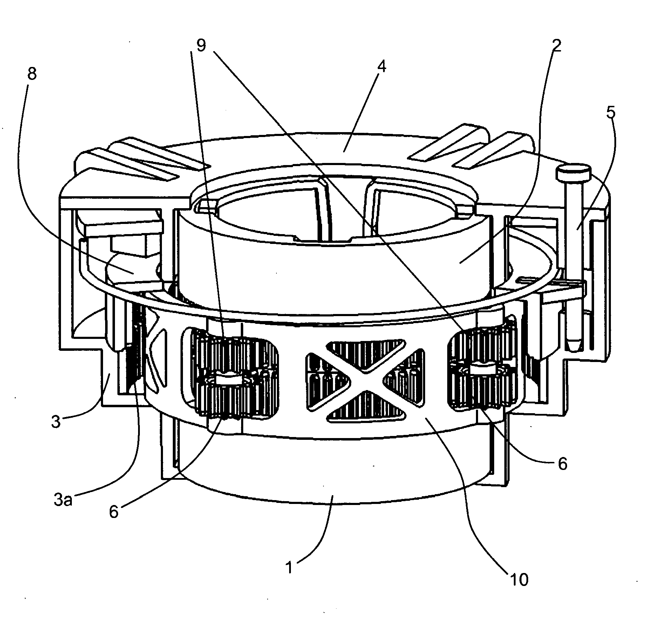

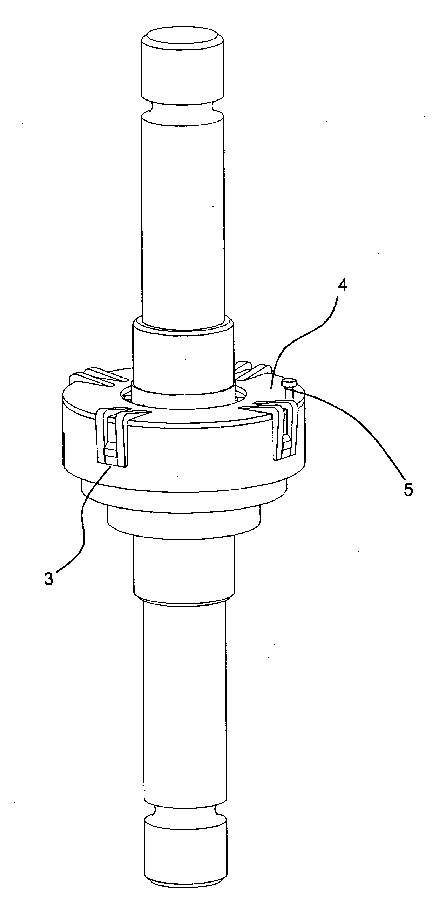

Fig. 1 und Fig. 2 zeigen einen Rotor 1, der sich mit dem unteren Teil einer Lenksäule dreht, sowie einen Rotor 2, der sich mit dem oberen Teil einer Lenksäule dreht. Die geteilte Lenksäule ist in Fig. 2 so zu denken, dass sie in Höhe eines (nicht dargestellten) Torsionsstabs den Drehmomentsensor gemäß Fig. 2 durchsetzt. Diese Anwendung ist in Fig.3 explizit dargestellt.

Ein Gehäuse 3 und ein Gehäusedeckel 4 nehmen den Drehmomentsensor auf und schützen ihn. Das Gehäuse 3 weist eine Innenverzahnung 3a auf und wirkt dadurch als Hohlrad 3, 3a des unteren Planetengetriebes. Zwischen dem unteren Rotor 1, der eine Außenverzahnung 1a trägt, und dem Hohlrad 3, 3a liegt ein Satz von beispielsweise vier Planetenrädern 6. Sie drehen sich um Planetenachsen 7, wenn der Rotor 1 und das Gehäuse 3 gegeneinander drehen.

Die gleiche Betrachtung und ein entsprechender Aufbau gelten für die obere Planetenstufe. Eine Verdrehanzeige 8 hat eine Innenverzahnung 8a und der obere Rotor 2 hat eine Außenverzahnung 2a. Dazwischen liegt ein Satz von beispielsweise vier Planetenrädern 9, die sich um Planetenachsen drehen, die zweckmäßigerweise auf den bereits genannten Planetenachsen 7 liegen. So können sich auch der obere Rotor 2 und die Verdrehanzeige 8 gegeneinander drehen.

Die kleinen Achswellen 7 werden in einem Planetenträger 10 gehalten. Der Schlüssel zum Verständnis der Erfindung ist, dass alle Planetenräder 6 und 9 diesen Planetenträger 10 gemeinsam besitzen. Dadurch werden die zwei Stufen des Planetengetriebes in einer Weise gekoppelt, die durch die folgenden vereinfachten Beispiele einer Drehwinkel- und Drehmomentanzeige veranschaulicht werden kann:
1. Der Rotor 1 steht fest; der Planetenträger 10 blockiert; die oberen Planetenräder 9 drehen sich wegen einer Verdrehung des Rotors 2; dabei bewegen sie die Verdrehanzeige 8; ein Magnet 11 auf der Verdrehanzeige 8 streicht über einen Hall-Sensor 12, der auf einer verriegelten Leiterplatte 13 untergebracht ist.
2. Im umgekehrten Fall steht der Rotor 2 fest; aber jetzt blockiert der Planetenträger 10 nicht; infolge einer Relativbewegung des Rotors 1 rollen die unteren Planetenräder 6 auf dem Hohlrad 3 ab und bewegen den Planetenträger 10; der Planetenträger 10 bewegt über die Planetenräder 9 (und den feststehenden Rotor 2) die Verdrehanzeige 8; die Verdrehanzeige 8 trägt beispielsweise den Magneten 11, der beispielsweise den Hall-Sensor 12 überstreicht.

Im allgemeinen Fall steht weder der Rotor 1 noch der Rotor 2 fest, d.h. beim vorgesehenen Einsatz bewegen sich beide Rotoren. Aber auch dann wird ihr relativer Verdrehwinkel zueinander gemessen. Auf die absolute Winkellage kommt es nicht an, solange nur das in der Lenksäule übertragene Drehmoment interessiert. Der Winkel der Verdrehanzeige 8 (relativ zu der gehäusefest verriegelten Leiterplatte 13) repräsentiert in jedem Fall das gesuchte Drehmoment.

Diese Ortsunabhängigkeit führt auch dazu, dass das Drehmoment während einer Drehbewegung der Lenksäule (oder einer vergleichbaren Welle) an einer beliebigen Winkelposition innerhalb einer Umdrehung gemessen werden kann. Drehbewegungen mit konstantem Moment verändern das Ausgangssignal nicht. Dementsprechend hat auch eine Drehbewegung ohne Moment keinen Einfluss auf das Ausgangssignal.

Für die eigentliche Sensorik des Differenzwinkels kann jeder beliebige Sensor verwendet werden, z.B. ein Hall-Sensor, ein optischer Sensor, ein Inkrementalgeber, eine induktive Sensorik usw. Das elektrische Sensorausgangssignal steht in einem bestimmten, vorwiegend proportionalen Zusammenhang mit dem Verdrehwinkel und mit dem Drehmoment. In einer zugehörigen Elektronik wird das Drehmoment durch Kalibrierung ermittelt.

Der Messbereich für den Verdrehwinkel beträgt mithilfe des Planetengetriebes circa +/- 25 Grad. Für Hall-Sensorik ist wegen der Geometrie ein Messbereich von +/- 15 Grad sinnvoll.

Ein weiteres Merkmal der Erfindung stellt die Toleranzausgleichsfeder 14 dar. Sie wird verwendet, um kleinste Drehungen der Rotoren 1 und 2 sicher und schnell anzuzeigen. Mit ihrer Hilfe ist es möglich, auch solche Zahnräder zu verwenden, die größere Toleranzen aufweisen. So kann ein relativ großes Spiel zwischen den einzelnen Zahnrädern ausgeglichen werden. Man erhält ein Planetengetriebe, das trotz größerer Fertigungstoleranzen präzise arbeitet und gleichzeitig Kosten spart.

Der Stift 5 dient einer Verdrehsicherung 16 des zweistufigen Planetengetriebes vor der Montage beim Kunden. Durch die Feder 14 (Toleranz- bzw. Spielausgleich) wird dem Planetengetriebe ein -wenn auch sehr kleines- Drehmoment aufgeprägt. Dieses Moment könnte, solange das Planetengetriebe nicht durch eine bereits erfolgte Montage auf beispielsweise einer Lenkwelle gesichert ist, das Getriebe verdrehen. Eine Montage beim Kunden wäre dann nur unter erhöhtem Aufwand möglich. Die Verdrehsicherung 16 mittels des Stiftes 5 soll das Getriebe bis zur Montage auf den tordierbaren Wellenstümpfen der Anwendungsvorrichtung blockieren. Nach der Montage muss der Stift 5 beim Anwender der geschützten Vorrichtung gezogen werden. Die Fig.3 zeigt die geteilte Lenksäule eines Kraftfahrzeugs, auf der die erfindungsgemäße Messvorrichtung montiert ist. Von außen zu sehen sind das Gehäuse 3 und der Gehäusedeckel 4. Der Stift 5 ist noch nicht gezogen, so dass die Verdrehsicherung 16 (Fig.1) noch nicht freigegeben ist. Die Montagerichtung kann auch umgekehrt wie in Fig.3 sein, so dass das Gehäuse 3 und der Gehäusedeckel 4 anders herum eingebaut sind bzw. der untere Rotor 1 oben liegen kann und der obere Rotor 2 oben liegen kann.

### Liste der Bezugszeichen:

- 1: unterer Rotor
- 1a: Außenverzahnung
- 2: oberer Rotor
- 2a: Außenverzahnung
- 3: Gehäuse
- 3a: Innenverzahnung
- 4: Gehäusedeckel
- 5: Stift
- 6: Planetenrad
- 7: Achsen, Wellen
- 8: Verdrehanzeige
- 8a: Innenverzahnung
- 9: Planetenrad
- 10: Planetenträger
- 11: Magnet
- 12: Hall-Sensor
- 13: Leiterplatte
- 14: Toleranzausgleichsfeder
- 16: Verdrehsicherung

## Patentansprüche

1. Vorrichtung zum Ermitteln eines relativen Verdrehwinkeis zweier Kraftfahrzeug-Bauteile, ins besondere zur Verwendung bei der anschließenden Ermittlung eines Drehmoments in einer geteilten Lenksäule,
**gekennzeichnet durch** ein zweistufiges Planetengetriebe, dessen Stufen (i) durch einen gemeinsamen Planetenträger (10) verbunden sind sowie (ii) das gleiche Übersetzungsverhältnis aufweisen,
wobei je eine Stufe des Planetengetriebes je einem der zwei relativ zueinander verdrehbaren Kraftfahrzeug-Bauteile so zugeordnet ist, dass
- je ein Kraftfahrzeug-Bauteil mit je einem Rotor (1; 2) mit Außenverzahnung (1 a; 2a) der Planetengetriebestufen fest verbunden ist, und dass
- zwei außen liegende Räder (3; 8) mit Innenverzahnung (3a; 8a) der Planetengetriebestufen den relativen Verdrehwinkel mechanisch anzeigen.

2. Vorrichtung nach Anspruch 1, **gekennzeichnet durch** einen Anzeigering bzw. eine Verdrehanzeige (8) mit Innenverzahnung (8a), die als Hohlrad des Planetengetriebes wirkt und den Differenzwinkel zweier Rotoren (1, 2) des Planetengetriebes anzeigt und hierzu drehbar in einem Gehäuse (3) oder in einem Gehäusedeckel (4) gelagert ist.

3. Vorrichtung nach Anspruch 1 oder 2, **gekennzeichnet durch** ein Gehäuse (3) mit Innenverzahnung (3a), dass als Hohlrad des Planetengetriebes wirkt.

4. Vorrichtung nach Anspruch 1 bis 3, **gekennzeichnet durch** zwei Sätze von ein oder mehreren Planetenrädern (6, 9), die in dem gemeinsamen Planetenträger (10) drehbar gelagert sind.

5. Vorrichtung nach Anspruch 2 bis 4, **gekennzeichnet durch** einen Schaltungsträger (13), der ortsfest zum Gehäuse (3) oder Gehäusedeckel (4) angeordnet ist und mittels eines von ihm getragenen Sensors (12) die Winkelposition der Verdrehanzeige (8) bestimmt, die ihrerseits einen entsprechenden Geber (11) trägt.

6. Vorrichtung nach Anspruch 1 bis 5, **gekennzeichnet durch** eine Toleranzausgleichsfeder (14) zum Ausgleich der Toleranzen der Zahnräder (6, 9) des Planetengetriebes.

7. Vorrichtung nach Anspruch 6, **gekennzeichnet durch** eine Befestigung der Toleranzausgleichsfeder (14) am Gehäuse (3).

8. Drehmomentsensor, insbesondere für eine geteilte Lenksäule mit Torsionsstab, **gekennzeichnet durch** ein zweistufiges Planetengetriebe, bei dem die Stufen **durch** einen gemeinsamen Planetenträger (10) verbunden sind, wobei die zwei Stufen des Planetengetriebes das gleiche Übersetzungsverhältnis aufweisen, wobei zwei außen liegende Räder (3; 8) mit Innenverzahnung (3a; 8a) der Planetengetriebestufen den relativen Verdrehwinkel mechanisch anzeigen.

9. Geteilte Lenksäule mit Torsionsstab und Drehmomentsensor, **gekennzeichnet durch** ein zweistufiges Planetengetriebe an der Teilungsstelle der Lenksäule, wobei die Stufen des Planetengetriebes **durch** einen gemeinsamen Planetenträger (10) verbunden sind und die zwei Stufen des Planetengetriebes das gleiche Übersetzungsverhältnis aufweisen, wobei zwei außen liegende Räder (3, 8) mit Innenverzahnung (3a; 8a) der Planetengetriebestufen den relativen Verdrehwinkel mechanisch anzeigen.

10. Kraftfahrzeug mit einer geteilten Lenksäule samt Torsionsstab und Drehmomentsensor, **gekennzeichnet durch** ein zweistufiges Planetengetriebe an der Teilungsstelle der Lenksäule,
wobei die Stufen des Planetengetriebes **durch** einen gemeinsamen Planetenträgers (10) verbunden sind und die zwei Stufen des Planetengetriebes das gleiche Übersetzungsverhältnis aufweisen, wobei zwei außen liegende Räder (3; 8) mit Innenverzahnung (3a; 8a) der Planetengetriebestufen den relativen Verdrehwinkel mechanisch anzeigen.

11. Kraftfahrzeug nach Anspruch 12, **gekennzeichnet durch** ein Merkmal oder mehrere Merkmale der Unteransprüche 2 bis 7.

## Claims

1. Device for determining a relative angle of twist between two motor vehicle components, in particular for use in the subsequent determination of a torque in a split steering column,
**characterized by** a two-stage planetary gear set whose stages (i) are connected by means of a common planet carrier (10) and (ii) have the same transmission ratio, with in each case one stage of the planetary gear set being assigned to in each case one of the motor vehicle components which can be rotated relative to one another, such that
- in each case one motor vehicle component is fixedly connected to in each case one rotor (1; 2), with external toothing (1a; 2a), of the planetary gear set stages, and that
- two outer wheels (3; 8), with internal toothing (3a; 8a), of the planetary gear set stages mechanically indicate the relative angle of twist.

2. Device according to Claim 1, **characterized by** a display ring or a twist display (8), with internal toothing (8a), which acts as a ring gear of the planetary gear set and which indicates the differential angle of two rotors (1, 2) of the planetary gear set and which, for this purpose, is rotatably mounted in a housing (3) or in a housing cover (4).

3. Device according to Claim 1 or 2, **characterized by** a housing (3), with internal toothing (3a), which acts as a ring gear of the planetary gear set.

4. Device according to Claim 1 to 3, **characterized by** two sets of one or more planet gears (6, 9) which are rotatably mounted in the common planet carrier (10).

5. Device according to Claims 2 to 4, **characterized by** a circuit board (13) which is arranged in a positionally fixed manner relative to the housing (3) or housing cover (4) and which, by means of a sensor (12) which it bears, determines the angular position of the twist display (8) which in turn bears a corresponding encoder (11).

6. Device according to Claims 1 to 5, **characterized by** a tolerance compensation spring (14) for compensating the tolerances of the gearwheels (6, 9) of the planetary gear set.

7. Device according to Claim 6, **characterized by** a fastening of the tolerance compensation spring (14) to the housing (3).

8. Torque sensor, in particular for a split steering column with a torsion bar, **characterized by** a two-stage planetary gear set in which the stages are connected by means of a common planet carrier (10), with the two stages of the planetary gear set having the same transmission ratio, wherein two outer wheels (3; 8), with internal toothing (3a; 8a), of the planetary gear set stages mechanically indicate the relative angle of twist.

9. Split steering column with torsion bar and torque sensor, **characterized by** a two-stage planetary gear set at the parting point of the steering column, with the stages of the planetary gear set being connected by means of a common planet carrier (10) and with the two stages of the planetary gear set having the same transmission ratio, wherein two outer wheels (3; 8), with internal toothing (3a; 8a), of the planetary gear set stages mechanically indicate the relative angle of twist.

10. Motor vehicle having a split steering column together with torsion bar and torque sensor, **characterized by** a two-stage planetary gear set at the parting point of the steering column,
with the stages of the planetary gear set being connected by means of a common planet carrier (10) and with the two stages of the planetary gear set having the same transmission ratio, wherein two outer wheels (3; 8), with internal toothing (3a; 8a), of the planetary gear set stages mechanically indicate the relative angle of twist.

11. Motor vehicle according to Claim 12, **characterized by** one or more features of Subclaims 2 to 7.

## Revendications

1. Dispositif pour déterminer un angle de rotation relatif entre deux composants d'un véhicule automobile, notamment pour l'utilisation dans la détermination subséquente d'un couple dans une colonne de direction divisée,
**caractérisé par** un engrenage planétaire à deux étages, dont les étages (i) sont connectés par un porte-satellites commun (10), et (ii) présentent le même rapport de multiplication,
un étage respectif de l'engrenage planétaire étant associé à l'un respectif des deux composants du véhicule automobile pouvant tourner l'un par rapport à l'autre, de telle sorte que
- chaque composant du véhicule automobile soit connecté fixement à un rotor respectif (1 ; 2) par une denture extérieure (la ; 2a) des étages de l'engrenage planétaire, et que
- deux roues extérieures (3 ; 8) avec une denture intérieure (3a ; 8a) des étages de l'engrenage planétaire indiquent mécaniquement l'angle de rotation relatif.

2. Dispositif selon la revendication 1, **caractérisé par** une bague d'indication ou un affichage rotatif (8) avec une denture intérieure (8a), qui agit comme une couronne de l'engrenage planétaire et qui indique l'angle différentiel de deux rotors (1, 2) de l'engrenage planétaire, et qui est monté à cet effet de manière rotative dans un boîtier (3) ou dans un couvercle de boîtier (4).

3. Dispositif selon la revendication 1 ou 2, **caractérisé par** un boîtier (3) avec une denture intérieure (3a), qui agit en tant que couronne de l'engrenage planétaire.

4. Dispositif selon les revendications 1 à 3, **caractérisé par** deux jeux d'une ou plusieurs roues planétaires (6, 9) qui sont montées à rotation dans le porte-satellites commun (10).

5. Dispositif selon les revendications 2 à 4, **caractérisé par** un support de commutation (13) qui est disposé fixement par rapport au boîtier (3) ou au couvercle de boîtier (4), et qui détermine au moyen d'un capteur (12) supporté par lui, la position angulaire de l'affichage rotatif (8), qui porte pour sa part un transducteur correspondant (11).

6. Dispositif selon les revendications 1 à 5, **caractérisé par** un ressort de compensation des tolérances (14) pour compenser les tolérances des roues dentées (6, 9) de l'engrenage planétaire.

7. Dispositif selon la revendication 6, **caractérisé par** une fixation du ressort de compensation des tolérances (14) sur le boîtier (3).

8. Capteur de couple, en particulier pour une colonne de direction divisée avec une barre de torsion, **caractérisé par** un engrenage planétaire à deux étages, dans lequel les étages sont connectés par un porte-satellites commun (10), les deux étages de l'engrenage planétaire présentant le même rapport de multiplication, deux roues extérieures (3 ; 8) avec une denture intérieure (3a ; 8a) des étages de l'engrenage planétaire indiquant mécaniquement l'angle de rotation relatif.

9. Colonne de direction divisée avec barre de torsion et capteur de couple, **caractérisée par** un engrenage planétaire à deux étages au niveau de l'emplacement de division de la colonne de direction, les étages de l'engrenage planétaire étant connectés par un porte-satellites commun (10) et les deux étages de l'engrenage planétaire présentant le même rapport de multiplication, deux roues extérieures (3 ; 8) avec une denture intérieure (3a ; 8a) des étages de l'engrenage planétaire indiquant mécaniquement l'angle de rotation relatif.

10. Véhicule automobile avec une colonne de direction divisée incluant une barre de torsion et un capteur de couple, **caractérisé par** un engrenage planétaire à deux étages au niveau de l'emplacement de division de la colonne de direction,
les étages de l'engrenage planétaire étant connectés par un porte-satellite commun (10) et les deux étages de l'engrenage planétaire présentant le même rapport de multiplication, deux roues extérieures (3 ; 8) avec une denture intérieure (3a ; 8a) des étages de l'engrenage planétaire indiquant mécaniquement l'angle de rotation relatif.

11. Véhicule automobile selon la revendication 10, **caractérisé par** une ou plusieurs caractéristiques des revendications secondaires 2 à 7.
